# EUROPEAN PATENT APPLICATION

(11) **EP 2 418 880 A1**
(43) Date of publication of application: **15.02.2012**
(21) Application number: 10761729.2
(22) Date of filing: 08.04.2010
(51) Int. Cl.: H04W 8/02, H04W 60/04, H04W 88/06

(54) **MOBILE COMMUNICATION METHOD, MOBILE STATION, AND SWITCHING STATION**

(30) Priority: 10.04.2009 JP 2009096507; 30.10.2009 JP 2009251459
(71) Applicant: NTT DOCOMO, INC., Chiyoda-ku Tokyo 100-6150 (JP)
(72) Inventor: NISHIDA, Katsutoshi, Tokyo 100-6150 (JP); KANAUCHI, Masashi, Tokyo 100-6150 (JP); SUZUKI, Keisuke, Tokyo 100-6150 (JP)
(74) Representative: HOFFMANN EITLE
(86) International application number: PCT/JP2010/056351
(87) International publication number: WO 2010/117030

(57) **Abstract**

A mobile communication method according to the present invention comprising, a step in which a mobile station transmits a first location registration request signal including capability information indicating that it is compatible with a second radio access network, to a mobile switching center housing a first radio access network, a step in which the mobile switching center transmits a location registration rejection signal, which includes information indicating that communication using a second radio access network is not allowed, to the mobile station, a step in which the mobile station transmits a second location registration request signal, which includes capability information indicating that it is not compatible with the second radio access network, to the mobile switching center in response to the location registration rejection signal and a step in which the mobile switching center performs a location registration process with respect to the first radio access network of the mobile station in response to the second location registration request signal.

## Description

### TECHNICAL FIELD

The present invention relates to a mobile communication method, a mobile station, and a mobile switching center.

### BACKGROUND ART

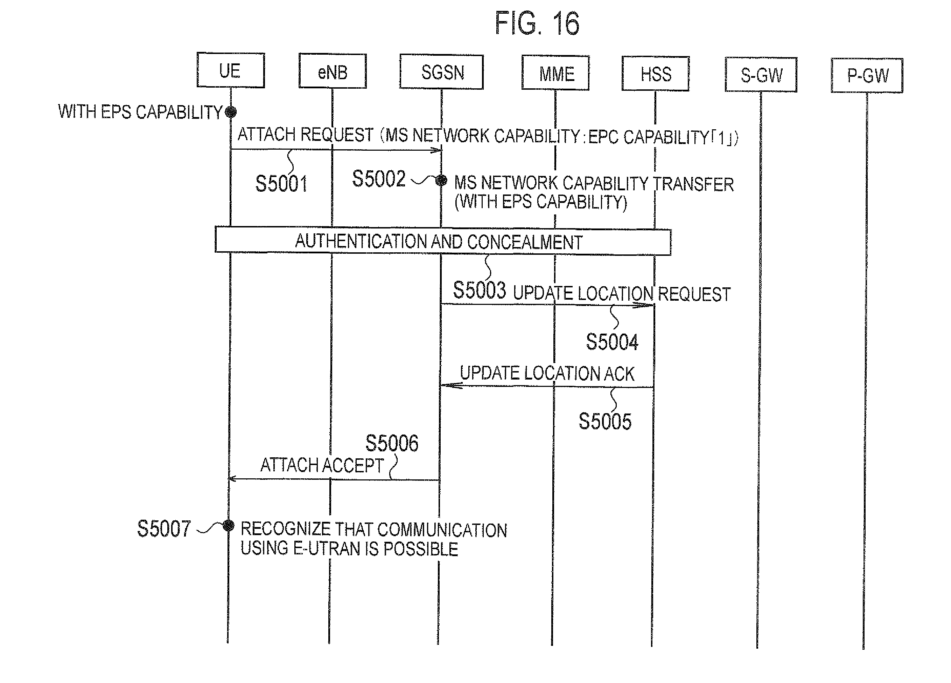

With reference to Fig. 16, in a mobile communication system defined in the 3GPP, an operation will be described, in which a mobile station UE performs an Attach process with respect to a UTRAN (Universal Terrestrial Radio Access Network) in an EPC (Evolved Packet Core) network housing the UTRAN and an E-UTRAN (Evolved Universal Terrestrial Radio Access Network).

As illustrated in Fig. 16, in step S5001, the mobile station UE (i.e., a mobile station UE compatible with E-UTRAN), which has a capability (EPS capability) of being connected to the EPC network using the E-UTRAN, transmits an "Attach Request" including an "MS Network Capability" to which "EPC Capability:1" is set to a mobile switching center SGSN housing the UTRAN. In step S5002, the mobile switching center SGSN acquires the "MS Network Capability" from the received "Attach Request".

After an authentication process and a concealment process are performed with respect to the mobile station UE in step S5003, the mobile switching center SGSN transmits an "Update Location Request" to a home subscriber server HSS in step S5004.

The home subscriber server HSS performs a location registration process with respect to the UTRAN of the mobile station UE, and then transmits an "Update Location Ack" to the mobile switching center SGSN in step S5005.

In step S5006, the mobile switching center SGSN transmits an "Attach Accept" to the mobile station UE, which indicates the completion of an Attach process for the UTRAN of the mobile station UE.

For example, even when it is determined that only communication using the E-UTRAN is not allowed for the mobile station UE in step S5002 or steps S5004 and S5005, since it is not possible to notify the mobile station UE of the determination through the "Attach Accept", it is not possible for the mobile station UE to recognize that the communication using the E-UTRAN is not allowed, in step S5007.

### PRIOR ART DOCUMENT

### NON-PATENT DOCUMENT

Non-Patent Document 1: 3GPP TS23.060
Non-Patent Document 2: 3GPP TS24.008

### SUMMARY OF THE INVENTION

### PROBLEMS TO BE SOLVED BY THE INVENTION

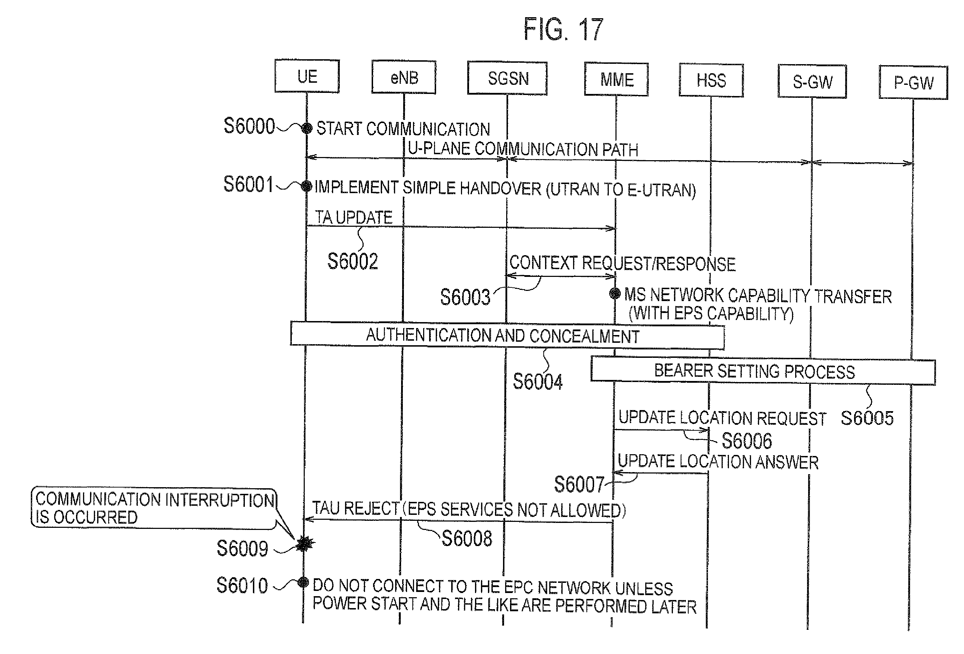

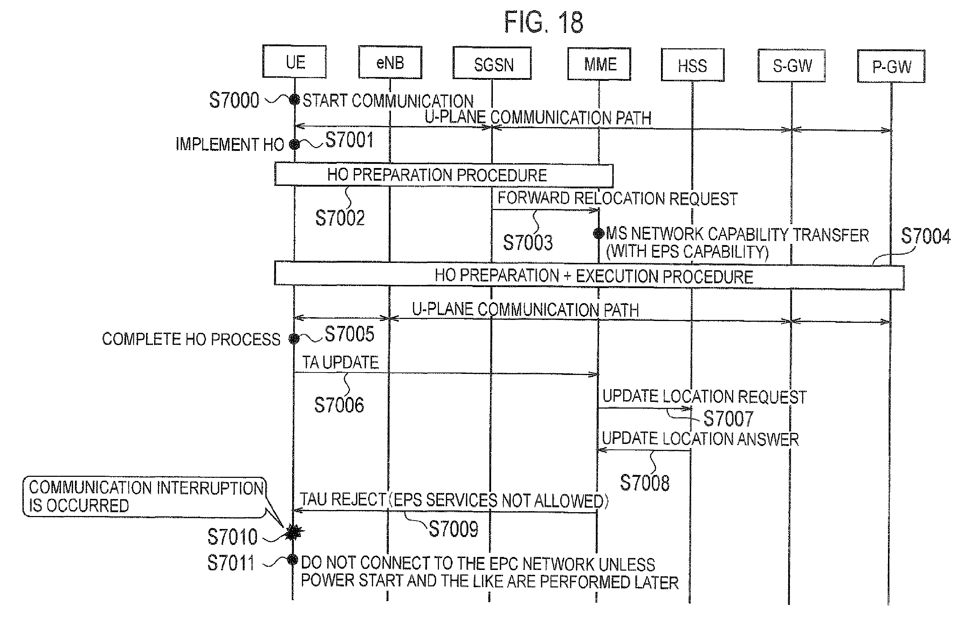

Hereinafter, with reference to Fig. 17 and Fig. 18, problems in the above-mentioned mobile communication system will be explained.

Firstly, as illustrated in Fig. 17, when the mobile station UE has started communication via the UTRAN in step S6000 and then has determined to perform radio switching due to the movement to a cover area of the E-UTRAN without performing a handover process to the E-UTRAN from the UTRAN in step S6001, the mobile station UE transmits a "TA Update" to a mobile switching center MME housing the E-UTRAN in step S6002.

In step S6003, the mobile switching center MME housing the E-UTRAN acquires context information of the mobile station UE, which includes an "MS Network Capability", from the mobile switching center SGSN.

After an authentication process and a concealment process are performed with respect to the mobile station UE in step S6004, a bearer setup process is performed between the mobile switching center MME and a gateway device P-GW in step S6005.

In step S6006, the mobile switching center MME transmits an "Update Location Request" to the home subscriber server HSS.

The home subscriber server HSS performs a location registration process with respect to the UTRAN of the mobile station UE, and then transmits an "Update Location Answer" to the mobile switching center MME in step S6007.

For example, when it is determined that communication using the E-UTRAN is not allowed for the mobile station UE in step S6003 or steps S6006 and S6007, the mobile switching center MME transmits a "TAU Reject" including an "EPS services not allowed".

In step S6009, the communication performed by the mobile station UE is interrupted, and in step S6010, the mobile station UE does not perform a connection to the EPC network unless power restart and the like are performed later.

Secondly, as illustrated in Fig. 18, when the mobile station UE has started communication via the UTRAN in step S7000 and then has determined to perform a handover process to the E-UTRAN from the UTRAN due to the movement to a cover area of the E-UTRAN in step S7001, the mobile station UE performs an "HO Preparation procedure" with respect to the mobile switching center MME housing the E-UTRAN in step S7002.

In step S7003, the mobile switching center SGSN notifies the mobile switching center MME of context information of the mobile station UE, which includes an "MS Network Capability", through a "Forward Relocation Request".

In step S7004, an "HO Preparation procedure" and a "handover execution procedure" are performed.

After the above-mentioned handover is completed in step S7005, the mobile station UE transmits a "TA Update" to the mobile switching center MME in step S7006.

In step S7007, the mobile switching center MME transmits an "Update Location Request" to the home subscriber server HSS.

The home subscriber server HSS performs a location registration process with respect to the UTRAN of the mobile station UE, and then transmits an "Update Location Answer'' to the mobile switching center MME in step S7008,

When it is determined that communication using the E-UTRAN is not allowed for the mobile station UE in step S7003 or steps S7007 and S7008, the mobile switching center MME transmits a "TAU Reject" including an "EPS services not allowed".

In step S7010, the communication performed by the mobile station UE is interrupted, and in step S7011, the mobile station UE does not perform a connection to the EPC network unless power restart and the like are performed later.

As described above, in the conventional mobile communication system, there is a problem that even when it is determined that the communication using the E-UTRAN is not allowed, since it is not possible for the mobile station UE to recognize the fact, communication interruption may occur at the time of handover to the E-UTRAN of the mobile station UE, so that communication may not be performed in spite of using any one of the UTRAN and the E-UTRAN unless power restart and the like are performed.

Therefore, the present invention has been achieved in view of the above-described problems, and an object thereof is to provide a mobile communication method capable of preventing the occurrence of communication interruption and the impossibility of communication in spite of using any one of a UTRAN and an E-UTRAN unless power restart and the like are performed, when communication using a predetermined radio access network is not allowed for a mobile station, without performing a handover to the radio access network, a mobile station, and a mobile switching center.

### MEANT FOR SOLVING THE PROBLEM

The first feature of the present invention is summarized in that a mobile communication method comprising, a step in which a mobile station transmits a first location registration request signal including capability information indicating that it is compatible with a second radio access network, to a mobile switching center housing a first radio access network, a step in which the mobile switching center transmits a location registration rejection signal, which includes information indicating that communication using a second radio access network is not allowed, to the mobile station, a step in which the mobile station transmits a second location registration request signal, which includes capability information indicating that it is not compatible with the second radio access network, to the mobile switching center in response to the location registration rejection signal and a step in which the mobile switching center performs a location registration process with respect to the first radio access network of the mobile station in response to the second location registration request signal.

The second feature of the present invention is summarized in that a mobile station comprising a transmission unit configured to transmit a first location registration request signal, which includes capability information indicating that it is compatible with a second radio access network, to a mobile switching center housing a first radio access network and a reception unit configured to receive a location registration rejection signal, which includes information indicating that communication using a second radio access network is not allowed, from the mobile switching center, the transmission unit is configured to transmit a second location registration request signal, which includes capability information indicating that it is not compatible with the second radio access network, to the mobile switching center in response to the location registration rejection signal.

The third feature of the present invention is summarized in that a mobile switching center housing a first radio access network, the mobile switching center comprising a reception unit configured to receive a first location registration request signal, which includes capability information indicating that it is compatible with a second radio access network, from a mobile station, a transmission unit configured to transmit a location registration rejection signal, which includes information indicating that communication using a second radio access network is not allowed, to the mobile station, a location registration processing unit configured to perform a location registration process with respect to a first radio access network of the mobile station in response to a second location registration request signal which includes capability information indicating that it is not compatible with the second radio access network and is transmitted by the mobile station in response to the location registration rejection signal.

The forth feature of the present invention is summarized in that a mobile communication method comprising a step in which a mobile station transmits a location registration request signal including capability information indicating that it is compatible with a second radio access network, to a mobile switching center housing a first radio access network, a step in which the mobile switching center performs a location registration process with respect to the first radio access network of the mobile station in response to the location registration request signal, a step in which the mobile switching center transmits a location registration completion signal, which includes information indicating that communication using a second radio access network is not allowed, to the mobile station and a step in which the mobile station changes managed capability information from the capability information indicating that it is compatible with the second radio access network to capability information indicating that it is not compatible with the second radio access network, in response to the location registration completion signal.

The fifth feature of the present invention is summarized in that a mobile station comprising, a management unit configured to manage capability information indicating whether it is compatible with a second radio access network, a transmission unit configured to transmit a location registration request signal, which includes capability information indicating that it is compatible with the second radio access network, to a mobile switching center housing a first radio access network and a reception unit configured to receive a location registration completion signal, which includes information indicating that communication using a second radio access network is not allowed, from the mobile switching center, the management unit is configured to change managed capability information from the capability information indicating that it is compatible with the second radio access network to capability information indicating that it is not compatible with the second radio access network, in response to the location registration completion signal.

The sixth feature of the present invention is summarized in that a mobile switching center housing a first radio access network, the mobile switching center comprising, a reception unit configured to receive a location registration request signal, which includes capability information indicating that it is compatible with a second radio access network, from a mobile station, a location registration processing unit configured to perform a location registration process with respect to a first radio access network of the mobile station in response to the location registration request signal and a transmission unit configured to transmit a location registration completion signal, which includes information indicating that communication using a second radio access network is not allowed, to the mobile station.

The seventh feature of the present invention is summarized in that a mobile communication method comprising, a step A in which a mobile station transmits a location registration request signal including capability information indicating that it is compatible with a radio access network to a mobile switching center housing the radio access network, a step B in which the mobile switching center transmits a location registration rejection signal, which includes information indicating that communication using the radio access network is not allowed, to the mobile station and a step C in which the mobile station changes managed capability information from the capability information indicating that it is compatible with the radio access network to capability information indicating that it is not compatible with the radio access network, in response to the location registration rejection signal.

The eighth feature of the present invention is summarized in that a mobile station comprising, a management unit configured to manage capability information indicating whether it is compatible with a radio access network, a transmission unit configured to transmit a location registration request signal, which includes capability information indicating that it is compatible with the radio access network, to a mobile switching center housing the radio access network and a reception unit configured to receive a location registration rejection signal, which includes information indicating that communication using a radio access network is not allowed, from the mobile switching center, the management unit is configured to change managed capability information from the capability information indicating that it is compatible with the radio access network to capability information indicating that it is not compatible with the radio access network, in response to the location registration rejection signal.

The ninth feature of the present invention is summarized in that a mobile switching center housing a radio access network, the mobile switching center comprising, a reception unit configured to receive a location registration request signal, which includes capability information indicating that it is compatible with a radio access network, from a mobile station and a transmission unit configured to, when it is determined that communication using the radio access network is not allowed for the mobile station, transmit a location registration rejection signal, which includes information indicating that the communication using the radio access network is not allowed, to the mobile station.

### EFFECT OF THE INVENTION

As described above, according to the present invention, it is possible to provide a mobile communication method capable of preventing the occurrence of communication interruption and the impossibility of communication in spite of using any one of a UTRAN and an E-UTRAN unless power restart and the like are performed, when communication using a predetermined radio access network is not allowed for a mobile station, without performing a handover to the radio access network, a mobile station, and a mobile switching center.

### BRIEF DESCRIPTION OF THE DRAWINGS

[Fig. 1] Fig. 1 is an entire configuration diagram of a mobile communication system according to a first embodiment of the present invention.
[Fig. 2] Fig. 2 is a functional block diagram of a mobile switching center SGSN according to the first embodiment of the present invention.
[Fig. 3] Fig. 3 is a functional block diagram of a mobile station UE according to the first embodiment of the present invention.
[Fig. 4] Fig. 4 is a sequence diagram illustrating the operation of a mobile communication system according to the first embodiment of the present invention.
[Fig. 5] Fig. 5 is a sequence diagram illustrating the operation of a mobile communication system according to the first embodiment of the present invention.
[Fig. 6] Fig. 6 is a sequence diagram illustrating the operation of a mobile communication system according to a first modification of the present invention.
[Fig. 7] Fig. 7 is a sequence diagram illustrating the operation of a mobile communication system according to the first modification of the present invention.
[Fig. 8] Fig. 8 is a sequence diagram illustrating the operation of a mobile communication system according to a second modification of the present invention.
[Fig. 9] Fig. 9 is a sequence diagram illustrating the operation of a mobile communication system according to a third modification of the present invention.
[Fig. 10] Fig. 10 is a diagram explaining problems to be solved by a mobile communication system according to the third modification of the present invention.
[Fig. 11] Fig. 11 is a sequence diagram illustrating the operation of a mobile communication system according to the third modification of the present invention.
[Fig. 12] Fig. 12 is a sequence diagram illustrating the operation of a mobile communication system according to a fourth modification of the present invention.
[Fig. 13] Fig. 13 is a sequence diagram illustrating the operation of a mobile communication system according to the fourth modification of the present invention.
[Fig. 14] Fig. 14 is a sequence diagram illustrating the operation of a mobile communication system according to a fifth modification of the present invention.
[Fig. 15] Fig. 15 is a sequence diagram illustrating the operation of a mobile communication system according to the fifth modification of the present invention.
[Fig. 16] Fig. 16 is a sequence diagram illustrating the operation of a conventional mobile communication system.
[Fig. 17] Fig. 18 is a diagram explaining problems of the conventional mobile communication system.
[Fig. 18] Fig. 19 is a diagram explaining problems of the conventional mobile communication system.

### BEST MODES FOR CARRYING OUT THE INVENTION

### (Configuration of mobile communication system according to first embodiment of the present invention)

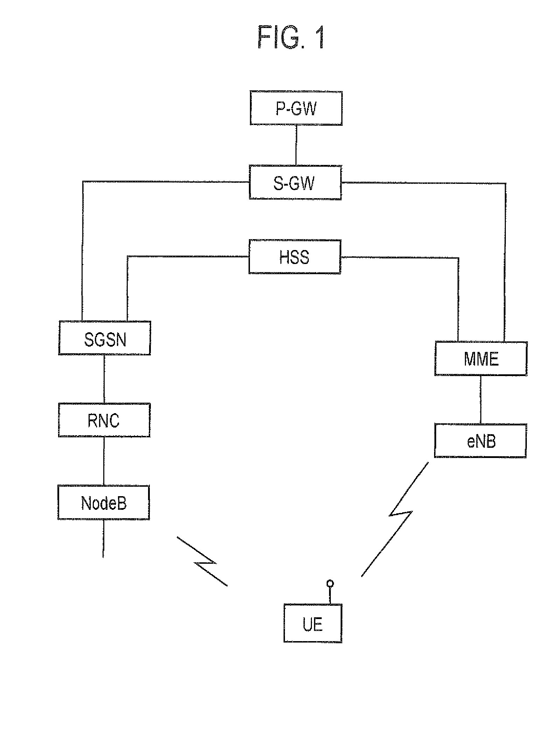

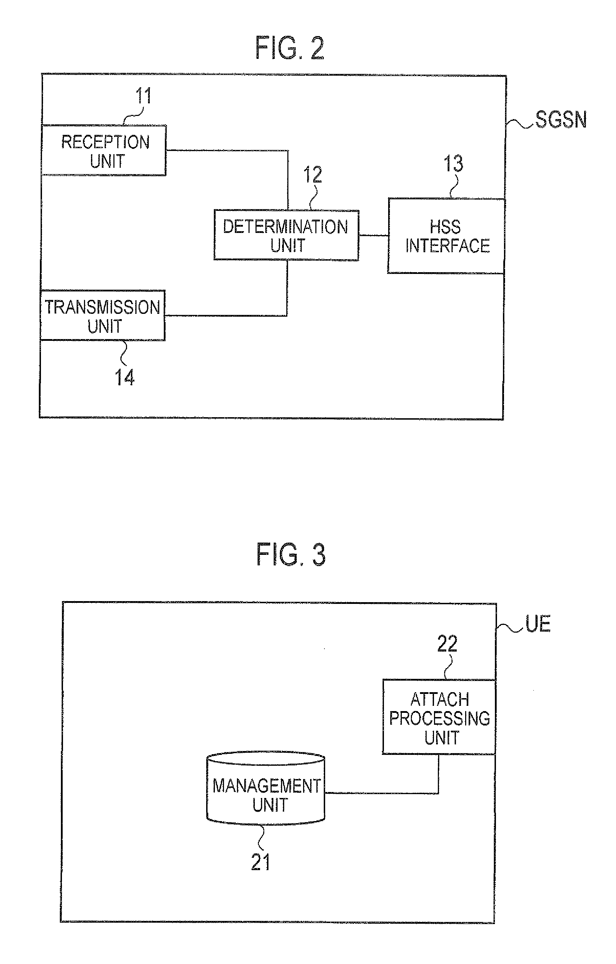

With reference to Fig. 1 trough Fig. 3, the configuration of a mobile communication system according to a first embodiment of the present invention will be explained.

As illustrated in Fig. 1, the mobile communication system according to the present embodiment includes both a UTRAN (a first radio access network) and an E-UTRAN (a second radio access network) in a mixed manner.

For example, the mobile communication system according to the present embodiment includes a gateway device P-GW, a gateway device S-GW, a home subscriber server (a predetermined server device) HSS, a mobile switching center SGSN housing the UTRAN, a radio network control station RNC of the UTRAN, a radio base station NodeB of the UTRAN, a mobile switching center MME housing the E-UTRAN, and a radio base station eNB of the E-UTRAN.

As illustrated in Fig. 2, the mobile switching center SGSN includes a reception unit 11, a determination unit 12, an HSS interface 13, and a transmission unit 14.

The reception unit 11 is configured to receive an "Attach Request" including an "MS Network Capability" from a mobile station UE.

Here, an "EPC Capability", which may be set as one of the "MS Network Capability", denotes capability information (e.g., 1 bit) indicating whether a mobile station UE is compatible with E-UTRAN.

For example, when an "EPC Capability:1" is set in the "MS Network Capability", it may indicate that the mobile station UE is compatible with the E-UTRAN. When an "EPC Capabiiity:0" is set in the "MS Network Capability", it may indicate that the mobile station UE is not compatible with the E-UTRAN.

The determination unit 12 is configured to decide which the mobile switching center SGSN or the home subscriber server HSS should determine whether communication using the E-UTRAN is allowed for the mobile station UE, based on identification information (e.g., IMSI (International Mobile Subscriber Identity), GUTI (Globally Unique Temporary UE Identity) and the like) included in the "Attach Request" including the "MS Network Capability" to which "EPC Capability: 1" is set.

For example, when the determination unit 12 has determined that the mobile station UE, which is a transmission source of the "Attach Request", is a mobile station UE for a home subscriber (a subscriber of the mobile communication system), the determination unit 12 is configure to decide that the home subscriber server HSS should determine whether the communication using the E-UTRAN is allowed for the mobile station UE based on the above-mentioned IMSI, and to transmit an "Update Location" including the "MS Network Capability" to the home subscriber server HSS via the HSS interface 13.

Meanwhile, when the determination unit 12 has determined that the mobile station UE, which is a transmission source of the "Attach Request", is not the subscriber of the mobile communication system but a mobile station UE roamed from other mobile communication systems, the determination unit 12 is configure to decide that the mobile switching center SGSN should determine whether the communication using the E-UTRAN is allowed for the mobile station UE based on the above-mentioned IMSI, and to determine whether the communication using the E-UTRAN is allowed for the mobile station UE.

The HSS interface 13 denotes a communication interface between the mobile switching center SGSN and the home subscriber server HSS.

For example, the HSS interface 13 is configured to transmit the "Update Location" to the home subscriber server HSS in response to the "Attach Request" including the "MS Network Capability" to which "EPC Capability:0" is set, thereby performing an Attach process with respect to the UTRAN of the mobile station UE.

Furthermore, the HSS interface 13 is configured to receive an "Update Location Ack" from the home subscriber server HSS.

Here, an "E-UTRAN access prohibited" may also be set in the "Update Location Ack", wherein the "E-UTRAN access prohibited" denotes information indicating that the communication using the E-UTRAN is not allowed for the mobile station UE.

The transmission unit 14 is configured to transmit an "Attach Reject" or an "Attach Accept" to the mobile station UE. In addition, when the communication using the E-UTRAN is not allowed for the mobile station UE, the transmission unit 14 is configured to transmit the "Attach Reject" including the "E-UTRAN access prohibited" to the mobile station UE.

As illustrated in Fig. 3, the mobile station UE includes a management unit 21 and an Attach processing unit 22.

The management unit 21 is configured to manage information on the mobile station UE. For example, the management unit 21 is configured to manage an "EPC Capability" (capability information indicating whether a mobile station UE is compatible with the second radio access network), which is one of the "MS Network Capability", as the information on the mobile station UE.

For example, when the "Attach Reject" including the "E-UTRAN access prohibited" is received, the management unit 21 is configured to recognize that the communication using the E-UTRAN is not allowed, and to update the value of the managed "EPC Capability" from "1" to "0".

The Attach processing unit 22 is configured to transmit an "Attach Request" to the mobile switching center SGSN or the mobile switching center MME. Specifically, the Attach processing unit 22 is configured to transmit the "Attach Request", which includes the "MS Network Capability" to which "EPC Capability" is set managed by the management unit 21, to the mobile switching center SGSN.

For example, when the "Attach Reject" including the "E-UTRAN access prohibited" is received from the mobile switching center SGSN, the Attach processing unit 22 is configured to transmit the "Attach Request", which includes the "MS Network Capability" to which "EPC Capability:0" is set, to the mobile switching center SGSN in response to the "Attach Reject".

### (Operation of mobile communication system according to first embodiment of the present invention)

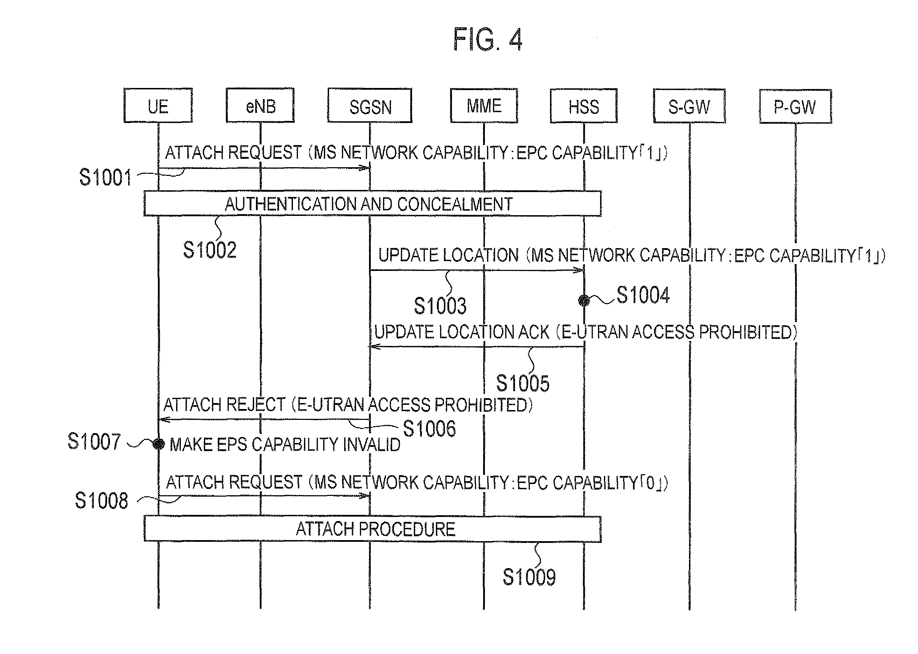

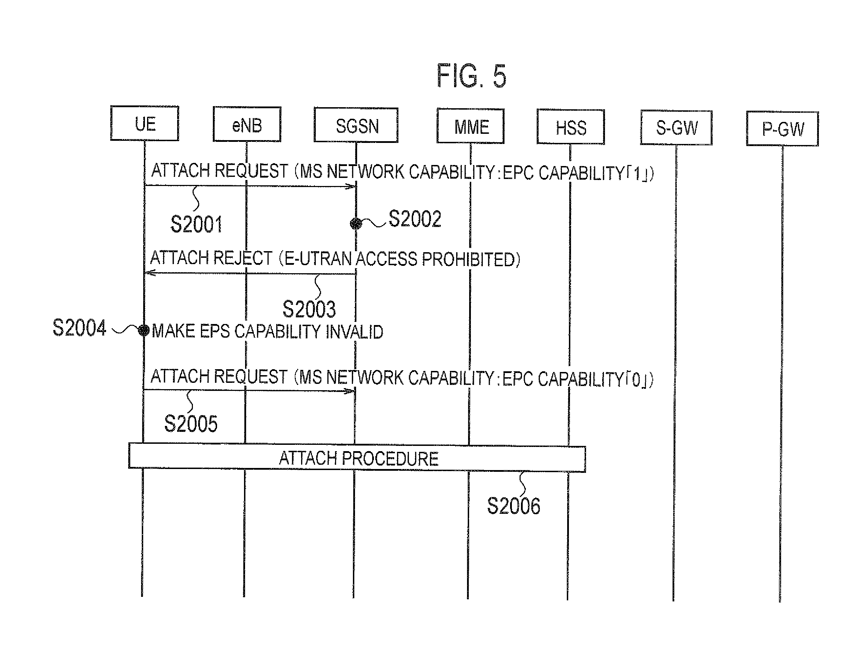

With reference to Fig. 4 and Fig. 5, the operation of the mobile communication system according to the first embodiment of the present invention will be explained.

Firstly, with reference to Fig. 4, the operation example 1 of the mobile communication system according to the first embodiment of the present invention will be explained.

As illustrated in Fig. 4, in step S1001, a mobile station UE (i.e., a mobile station UE compatible with E-UTRAN), which has a capability (EPS capability) of being connected to the EPC network using the E-UTRAN, transmits an "Attach Request" including an "MS Network Capability" to which "EPC Capability:1" is set to the mobile switching center SGSN. The mobile switching center SGSN acquires the "MS Network Capability" from the received "Attach Request".

When it is decided that the home subscriber server HSS should determine whether communication using the E-UTRAN is allowed for the mobile station UE (i.e., when the mobile station UE is a mobile station UE for a home subscriber), an authentication process and a concealment process are performed with respect to the mobile station UE in step S1002, and then the mobile switching center SGSN transmits an "Update Location Request" including the above-mentioned "MS Network Capability" to the home subscriber server HSS in step S1003.

When it is determined that the communication using the E-UTRAN is not allowed for the mobile station UE, the home subscriber server HSS. does not perform an Attach process with respect to the UTRAN of the mobile station UE in step S1004, and transmits an "Update Location Ack" including the "E-UTRAN access prohibited" to the mobile switching center SGSN in step S1005.

In step S1006, the mobile switching center SGSN transmits an "Attach Reject" including the "E-UTRAN access prohibited" to the mobile station UE.

In step S1007, the mobile station UE can recognize that the communication using the E-UTRAN is not allowed, through the "E-UTRAN access prohibited" included in the "Attach Reject", and invalidates the capability (EPS capability) of being connected to the EPC network using the E-UTRAN (i.e., changes the value of the "EPC Capability" managed by the management unit 21 from "1" to "0").

In step S1008, the mobile station UE transmits the "Attach Request" including the "MS Network Capability" to which "EPC Capability:0" is set to the mobile switching center SGSN in response to the "Attach Reject".

In step S1009, the mobile switching center SGSN performs the Attach process with respect to the UTRAN of the mobile station UE in response to the "Attach Request" including the "MS Network Capability" to which "EPC Capability:0" is set.

Secondly, with reference to Fig. 5, the operation example 2 of the mobile communication system according to the first embodiment of the present invention will be explained.

As illustrated in Fig. 5, in step S2001, a mobile station UE (i.e., a mobile station UE compatible with E-UTRAN), which has a capability (EPS capability) of being connected to the EPC network using the E-UTRAN, transmits an "Attach Request" including an "MS Network Capability" to which "EPC Capability:1" is set to the mobile switching center SGSN. The mobile switching center SGSN acquires the "MS Network Capability" from the received "Attach Request".

When it is decided that the mobile switching center SGSN. should determine whether communication using the E-UTRAN is allowed for the mobile station UE (i.e., when the mobile station UE is a roamed mobile station UE), the mobile switching center SGSN determines whether the communication using the E-UTRAN is allowed for the mobile station UE in step S2002.

When it is determined that the communication using the E-UTRAN is not allowed for the mobile station UE, the mobile switching center SGSN does not perform an Attach process with respect to the UTRAN of the mobile station UE, and transmits the "Attach Reject" including the "E- UTRAN access prohibited" to the mobile station UE in step S2003.

In step S2004, the mobile station UE can recognize that the communication using the E-UTRAN is not allowed, through the "E-UTRAN access prohibited" included in the "Attach Reject", and invalidates the capability (EPS capability) of being connected to the EPC network using the E-UTRAN (i.e., changes the value of the "EPC Capability" managed by the management unit 21 from "1" to "0").

In step S2005, the mobile station UE transmits the "Attach Request" including the "MS Network Capability" to which "EPC Capability:0" is set to the mobile switching center SGSN in response to the "Attach Reject".

In step S2006, the mobile switching center SGSN performs the Attach process with respect to the UTRAN of the mobile station UE in response to the "Attach Request" including the "MS Network Capability" to which "EPC Capabiiity:0" is set.

### (Operation and Effect of mobile communication system according to first embodiment of the present invention)

In accordance with the mobile communication system according to the first embodiment of the present invention, since the mobile station UE can recognize that communication using the E-UTRAN is not allowed, in response to the "E-UTRAN access prohibited" included in the "Attach Reject" transmitted by the mobile switching center SGSN, handover to the E-UTRAN is avoided in such a case, so that it is possible to avoid the occurrence of communication interruption.

### (First modification)

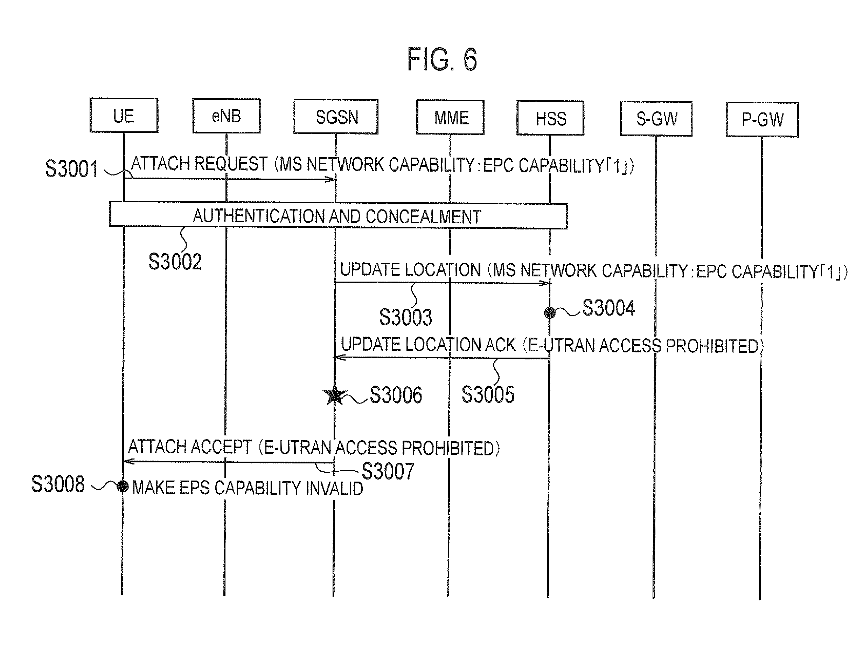

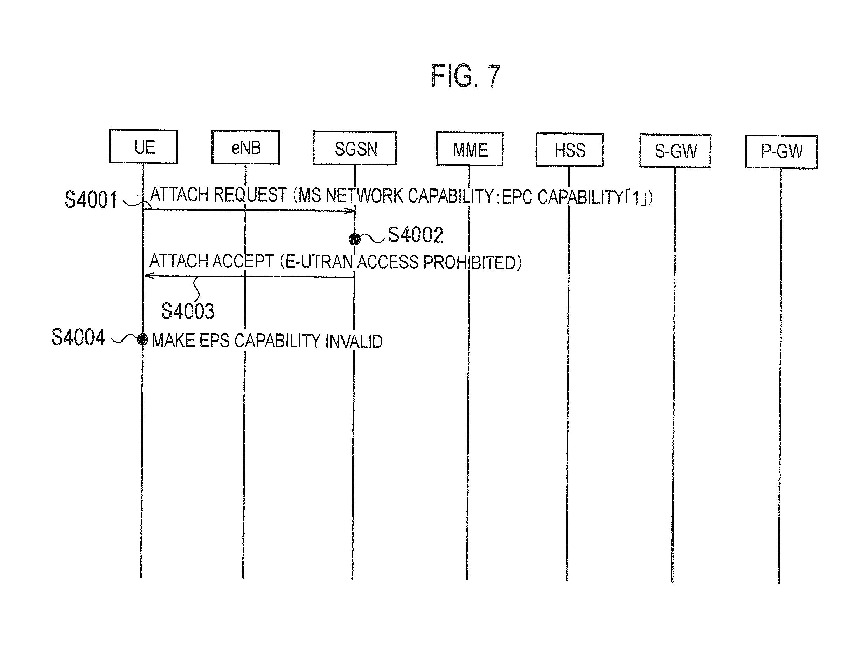

With reference to Fig. 6 and Fig. 7, a mobile communication system according to the first modification of the present invention will be explained. Hereinafter, the mobile communication system according to the first modification of the present invention will be explained while focusing on the difference relative to the above-mentioned mobile communication system according to the first embodiment.

In the mobile communication system according to the present first modification, when an "Attach Reject" including an "MS Network Capability" to which "EPC Capability:1" is set is received, even when communication using the E-UTRAN is not allowed for the mobile station UE, the HSS interface 13 of the mobile switching center SGSN is configured to transmit an "Update Location" to the home subscriber server HSS, thereby performing an Attach process with respect to the UTRAN of the mobile station UE.

In such a case, the transmission unit 14 of the mobile switching center SGSN is configured to transmit an "Attach Accept" including an "E-UTRAN access prohibited" to the mobile station UE.

For example, when the "Attach Accept" including the "E-UTRAN access prohibited" is received, the management unit 21 of the mobile station UE normally is configured to complete the Attach process, to recognize that the communication using the E-UTRAN is not allowed, and to change the value of the managed "EPC Capability" from "1" to "0".

With reference to Fig. 6 and Fig. 7, the operation of the mobile communication system according to the first modification of the present invention will be explained.

Firstly, with reference to Fig. 6, the operation example 1 of the mobile communication system according to the first modification of the present invention will be explained.

As illustrated in Fig. 6, in step S3001, a mobile station UE (i.e., a mobile station UE compatible with E-UTRAN), which has a capability (EPS capability) of being connected to the EPC network using the E-UTRAN, transmits an "Attach Request" including an "MS Network Capability" to which "EPC Capability:1" is set to the mobile switching center SGSN. The mobile switching center SGSN acquires the "MS Network Capability" from the received "Attach Request".

When it is decided that the home subscriber server HSS should determine whether communication using the E-UTRAN is allowed for the mobile station UE (i.e., when the mobile station UE is a mobile station UE for a home subscriber), an authentication process and a concealment process are performed with respect to the mobile station UE in step S3002, and then the mobile switching center SGSN transmits an "Update Location Request" including the above-mentioned "MS Network Capability" to the home subscriber server HSS in step S3003.

When it is determined that the communication using the E-UTRAN is not allowed for the mobile station UE, the home subscriber server HSS performs an Attach process with respect to the UTRAN of the mobile station UE in step S3004, and then transmits an "Update Location Ack" including an "E-UTRAN access prohibited" to the mobile switching center SGSN. in step S3005.

In step S3006, the mobile switching center SGSN transmits an "Attach Accept" including the "E-UTRAN access prohibited" to the mobile station UE.

In step S3007, the mobile station UE can recognize that the communication using the E-UTRAN is not allowed, through the "E-UTRAN access prohibited" included in the "Attach Accept", and invalidates the capability (EPS capability) of being connected to the EPC network using the E-UTRAN (i.e., changes the value of the "EPC Capability" managed by the management unit 21 from "1" to "0").

Secondly, with reference to Fig. 7, the operation example 2 of the mobile communication system according to the first modification of the present invention will be explained.

As illustrated in Fig. 7, in step S4001, a mobile station UE (i.e., a mobile station UE compatible with E-UTRAN), which has a capability (EPS capability) of being connected to the EPC network using the E-UTRAN, transmits an "Attach Request" including an "MS Network Capability" to which "EPC Capability:1" is set to the mobile switching center SGSN. The mobile switching center SGSN acquires the "MS Network Capability" from the received "Attach Request".

When it is decided that the mobile switching center SGSN should determine whether communication using the E-UTRAN is allowed for the mobile station UE (i.e., when the mobile station UE is a roamed mobile station UE), the mobile switching center SGSN determines whether the communication using the E-UTRAN is allowed for the mobile station UE in step S4002.

When it is determined that the communication using the E-UTRAN is not allowed for the mobile station UE, the mobile switching center SGSN performs an Attach process with respect to the UTRAN of the mobile station UE, and then transmits an "Attach Accept" including an "E-UTRAN access prohibited" to the mobile station UE in step S4003.

In step S4004, the mobile station UE can recognize that the communication using the E-UTRAN is not allowed, through the "E-UTRAN access prohibited" included in the "Attach Accept", and invalidates the capability (EPS capability) of being connected to the EPC network using the E-UTRAN (i.e., changes the value of the "EPC Capability" managed by the management unit 21 from "1" to "0").

### (Second Modification)

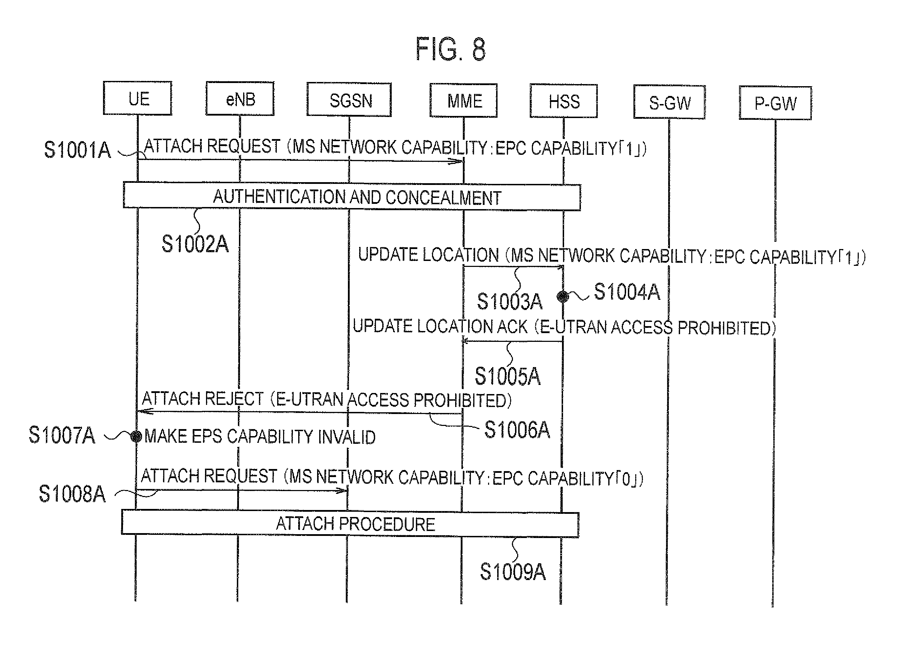

With reference to Fig. 8, a mobile communication system according to the second modification of the present invention will be explained. Hereinafter, the mobile communication system according to the second modification of the present invention will be explained while focusing on the difference relative to the above-mentioned mobile communication system according to the first embodiment.

In the present second modification, the mobile switching center MME has a function of the mobile switching center SGSN illustrated in Fig. 2.

As illustrated in Fig. 8, in step S1001A, a mobile station UE (i.e., a mobile station UE compatible with E-UTRAN), which has a capability (EPS capability) of being connected to the EPC network using the E-UTRAN, transmits an "Attach Request" including an "MS Network Capability" to which "EPC Capability:1" is set to the mobile switching center MME. The mobile switching center MME acquires the "MS Network Capability" from the received "Attach Request".

When it is decided that the home subscriber server HSS should determine whether communication using the E-UTRAN is allowed for the mobile station UE (i.e., when the mobile station UE is a mobile station UE for a home subscriber), an authentication process and a concealment process are performed with respect to the mobile station UE in step S1002A, and then the mobile switching center MME transmits an "Update Location Request" including the above-mentioned "MS Network Capability" to the home subscriber server HSS in step S1003A.

When it is determined that the communication using the E-UTRAN is not allowed for the mobile station UE in step S1004A, the home subscriber server HSS transmits an "Update Location Ack" including an "E-UTRAN access prohibited" to the mobile switching center MME in step S1005A.

In step S1006A, the mobile switching center MME transmits an "Attach Reject" including the "E-UTRAN access prohibited" to the mobile station UE.

In step S1007A, the mobile station UE can recognize that the communication using the E-UTRAN is not allowed, through the "E-UTRAN access prohibited" included in the "Attach Reject", and invalidates the capability (EPS capability) of being connected to the EPC network using the E-UTRAN (i.e., changes the value of the "EPC Capability" managed by the management unit 21 from "1" to "0").

In step S1008A, the mobile station UE may transmit the "Attach Request" including an "MS Network Capability" to which "EPC Capability:0" is set to the mobile switching center SGSN in response to the "Attach Reject".

When the above-mentioned "Attach Request" is transmitted by the mobile station UE, the mobile switching center SGSN performs an Attach process with respect to the UTRAN of the mobile station UE in response to the "Attach Request" including the "MS Network Capability" to which "EPC Capability:0" is set in step S1009A.

### (Third Modification)

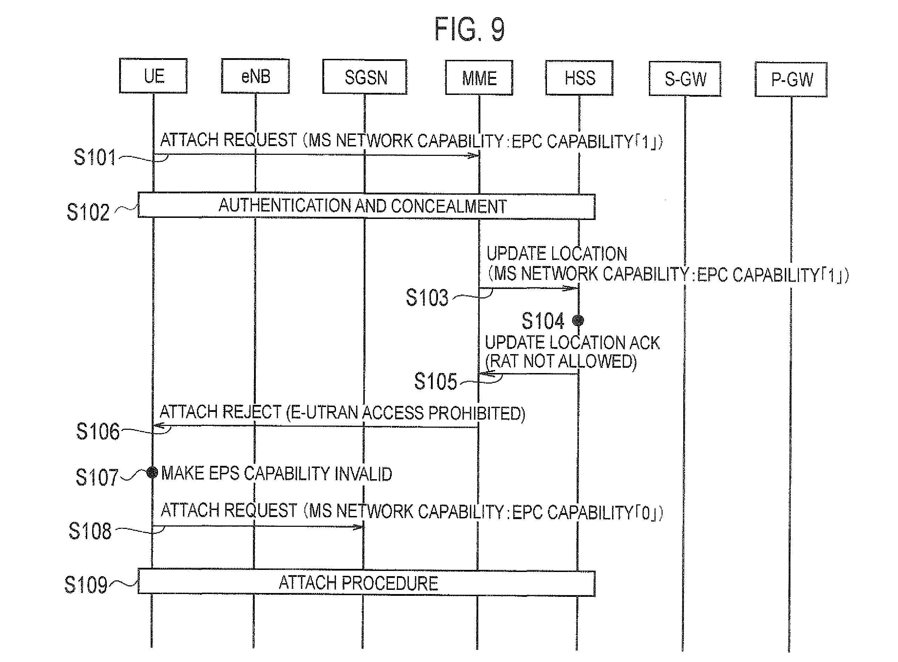

With reference to Fig. 9 through Fig. 11, a mobile communication system according to the third modification of the present invention will be explained. Hereinafter, the mobile communication system according to the third modification of the present invention will be explained while focusing on the difference relative to the above-mentioned mobile communication system according to the second modification.

In the mobile communication system according to the third modification of the present invention, when an "E-UTRAN access prohibited" is included in an "Attach Reject", the management unit 21 of the mobile station UE may be configured to permanently change the value of the "EPC Capability", which has been set as one of the "MS Network Capability", from "1" to "0" until a predetermined trigger such as power restart is detected. When a "No suitable cells in tracking area" and the like are included in the "Attach Reject", the management unit 21 may be configured to temporarily change the value of the "EPC Capability", which has been set as one of the "MS Network Capability", from "1" to "0".

Here, the "E-UTRAN access prohibited" denotes a rejection reason representing that the mobile station UE is compatible with both E-UTRAN and UTRAN, and the "No suitable cells in tracking area" denotes a rejection reason representing that the mobile station UE is compatible with only E-UTRAN.

Furthermore, in the mobile communication system according to the present third modification, the mobile switching center MME is assumed to be notified of whether the mobile station UE is compatible with E-UTRAN or UTRAN, by an Attach signal received from the mobile station UE.

Thus, in the mobile communication system according to the present third modification, when an "RAT NOT ALLOWED" is received from the home subscriber server HSS and the mobile station UE is compatible with "UTRAN (another radio access network)", the transmission unit 14 of the mobile switching center MME is configured to transmit the "Attach Reject" including the "E-UTRAN access prohibited".

Meanwhile, when the "RAT NOT ALLOWED" is received from the home subscriber server HSS and the mobile station UE is not compatible with "UTRAN", the transmission unit 14 of the mobile switching center MME may be configured to transmit the "Attach Reject" including the "No suitable cells in tracking area" and the like.

Here, the "RAT NOT ALLOWED" denotes information representing that the mobile station UE is not compatible with E-UTRAN.

Hereinafter, with reference to Fig. 9, in the mobile communication system according to the present third modification, an operation when the mobile station UE is compatible with "UTRAN" will be explained.

As illustrated in Fig. 9, the operations of step S101 to step S103 are the same as step S1001A to step S1003A illustrated in Fig. 8.

When the home subscriber server HSS determines that communication using the E-UTRAN is not allowed for the mobile station UE and the mobile station UE is compatible with "UTRAN" in step S104, the home subscriber server HSS transmits an "Update Location Ack" including the "RAT NOT ALLOWED" to the mobile switching center MME in step S105.

In addition, the determination regarding whether the mobile station UE is compatible with "UTRAN" may be performed by the mobile switching center MME, instead of the home subscriber server HSS.

In addition, when the home subscriber server HSS determines that communication using the E-UTRAN is not allowed for the mobile station UE and the mobile station UE is compatible with "UTRAN" in step S104, the home subscriber server HSS transmits an "Update Location Ack" including the "RAT NOT Allowed" to the mobile switching center MME in step S105.

Otherwise, when the home subscriber server HSS determines that communication using the E-UTPLAN is not allowed for the mobile station UE in step S1004, the home subscriber server HSS may transmit an "Update Location Ack" including the "RAT NOT Allowed" to the mobile switching center MME in step S105.

If the "Update Location Ack" including the "RAT NOT Allowed" is received, the mobile switching center MME transmits the "Attach Reject" including the "E-UTRAN access prohibited" to the mobile station UE in step S106.

Otherwise, when the mobile switching center MME receives the "Update Location Ack" including the "RAT NOT Allowed" and determines that the mobile station UE is compatible with "UTRAN", the mobile switching center MME may transmit the "Attach Reject" including the "E-UTRAN access prohibited" to the mobile station UE in step S106.

In step S107, the mobile station UE can recognize that the communication using the E-UTRAN is not allowed and the mobile station UE is compatible with "UTRAN", through the "E-UTRAN access prohibited" included in the "Attach Reject", and permanently invalidates the capability (EPS capability) of being connected to the EPC network using the E-UTRAN (i.e., changes the value of the "EPC Capability" managed by the management unit 21 from "1" to "0") until a predetermined trigger such as power restart is detected.

The operations of step S108 and step S109 are the same as the operations of step S1008A and step S1009A illustrated in Fig. 8.

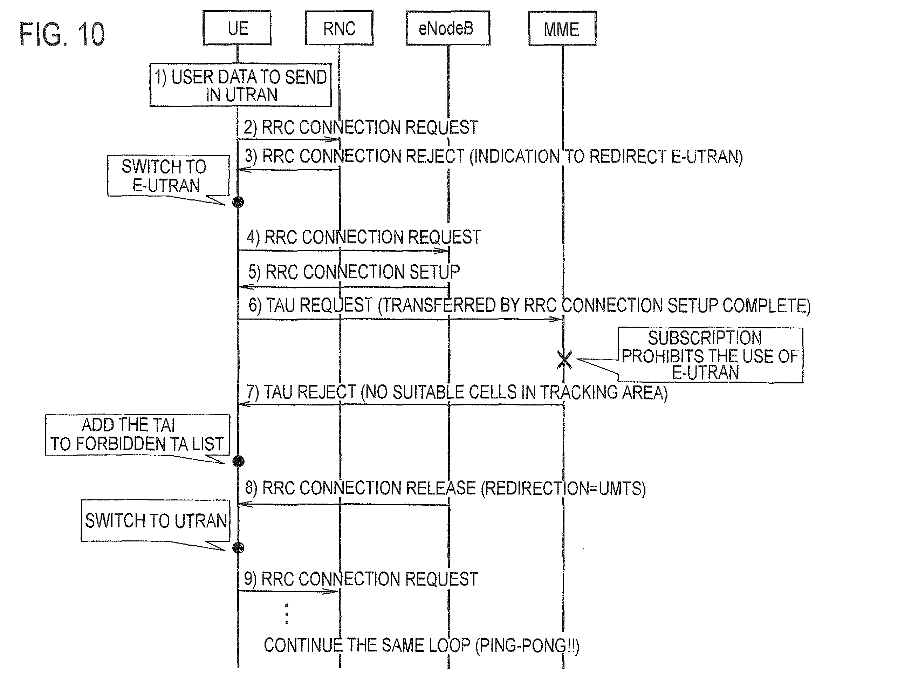

In accordance with the mobile communication system according to the present third modification, it is possible to solve the phenomenon that the operation illustrated in Fig. 10 is repeated. Hereinafter, the operation illustrated in Fig. 10 will be briefly explained.

As illustrated in Fig. 10, if user data to be transmitted is detected in a UTRAN mobile communication system in step 1, the mobile station UE transmits an "RRC Connection Request" to the radio network control station RNC in step 2

In step 3, the radio network control station RNC transmits an "RRC Connection Reject" including a redirection instruction to an E-UTRAN scheme to the mobile station UE.

In step 4, the mobile station UE decides to be redirected to the E-UTRAN, and transmits the "RRC Connection Request" to the radio base station eNB.

In step 5, the radio base station eNB transmits an "RRC Connection Setup" to the mobile station UE.

In step 6, the mobile station UE transmits a "TAU Request" to the mobile switching center MME.

In step 7, the mobile switching center MME transmits a "TAU Reject (No suitable cells in tracking area) and the like", which indicate that a location registration process for the E-UTRAN of the mobile station UE is prohibited, to the mobile station UE.

Here, the mobile station UE having received the "TAU Reject (No suitable cells in tracking area) and the like" registers a current Tracking Area ID in a "forbidden TA list" .

In step 8, the radio base station eNB transmits an "RRC Connection Release" including the redirection instruction to a UTRAN scheme to the mobile station UE.

In step 9, the mobile station UE decides to be redirected to the UTRAN, and transmits the "RRC Connection Request" to the radio network control station RNC.

Hereinafter, the processes after the above-mentioned step 3 are repeated.

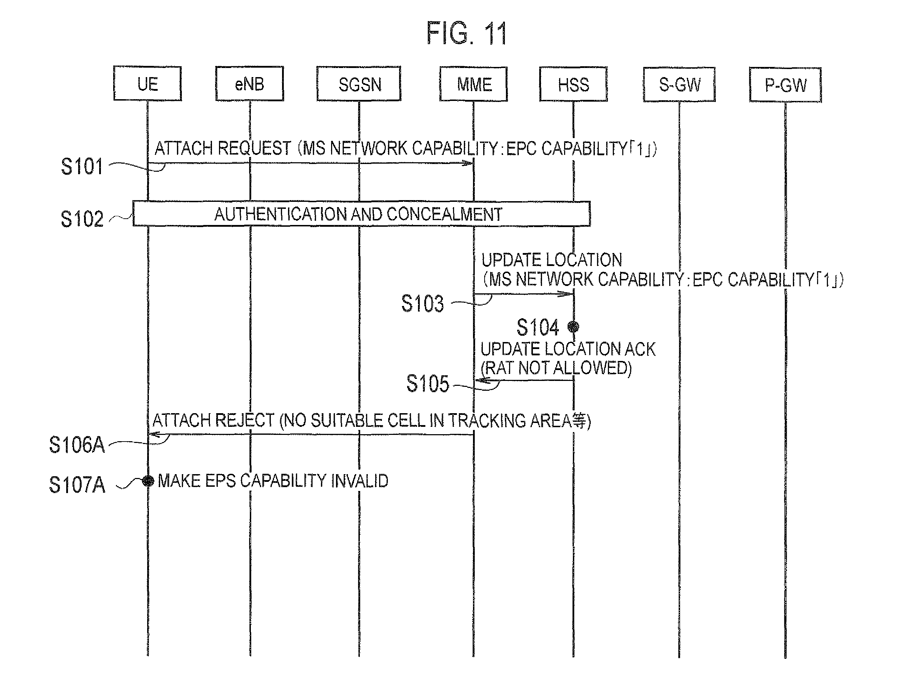

Meanwhile, with reference to Fig. 11, in the mobile communication system according to the present third modification, an operation when the mobile station UE is not compatible with "UTRAN" will be explained.

If the "Update Location Ack" including the "RAT NOT Allowed" is received, the mobile switching center MME transmits the "Attach Reject" including the "No suitable cells in tracking area" and the like to the mobile station UE in step S106A.

Otherwise, when the mobile switching center MME receives the "Update Location Ack" including the "RAM NOT Allowed" and determines that the mobile station UE is not compatible with "UTRAN", the mobile switching center MME may transmit the "Attach Reject" including the "No suitable cells in tracking area" and the like to the mobile station UE in step S106A.

In step S107A, the mobile station UE can recognize that the communication using the E-UTRAN is not allowed and the mobile station UE is not compatible with "UTRAN", through the "No suitable cells in tracking area" and the like included in the "Attach Reject", and temporarily invalidates the capability (EPS capability) of being connected to the EPC network using the E-UTRAN (i.e., changes the value of the "EPC Capability" managed by the management unit 21 from "1" to "0").

### (Fourth Modification)

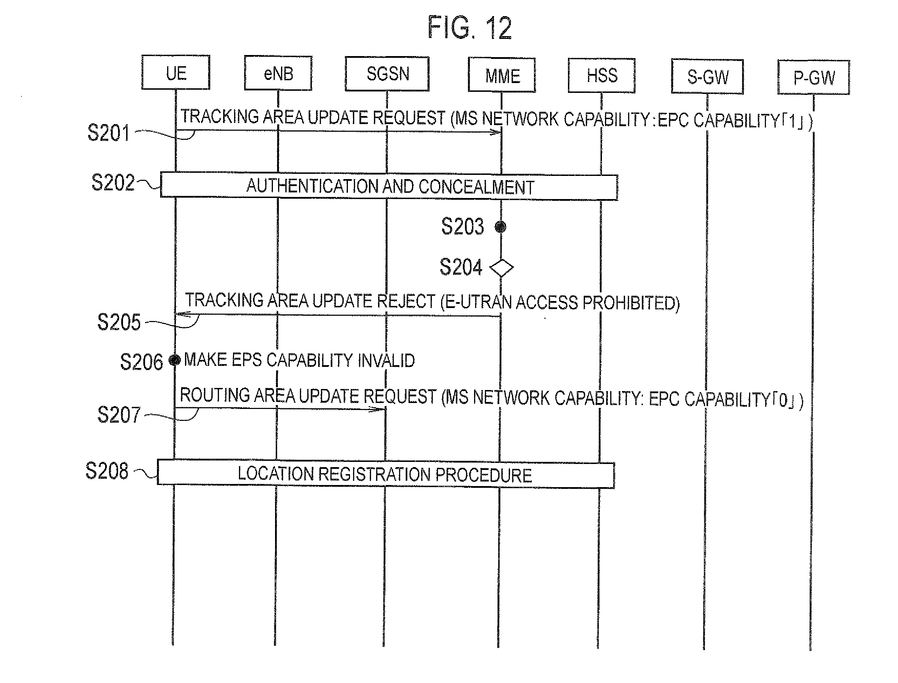

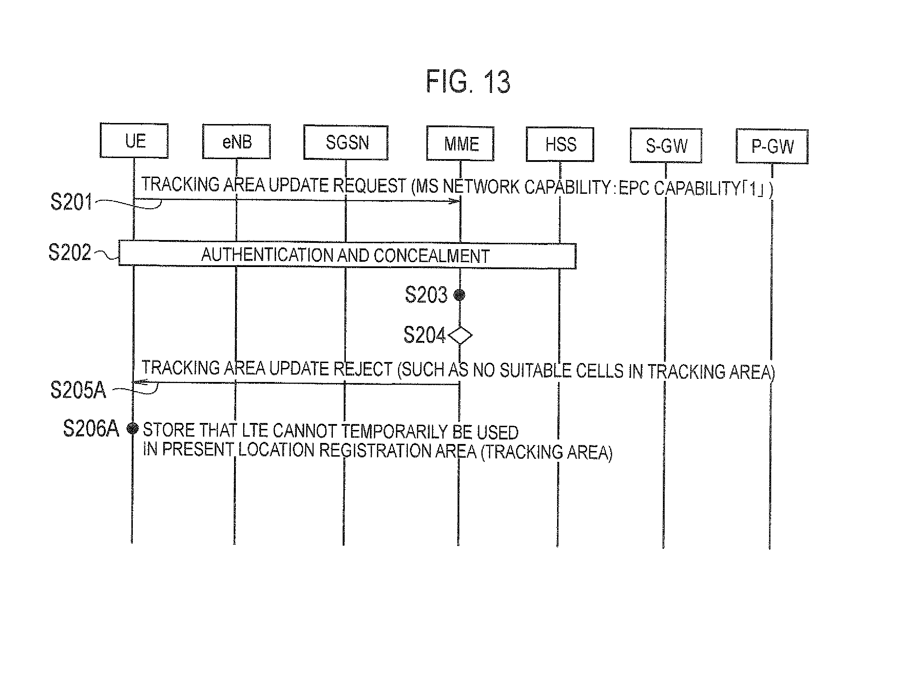

With reference to Fig. 12 and Fig. 13, a mobile communication system according to the fourth modification of the present invention will be explained. Hereinafter, the mobile communication system according to the fourth modification of the present invention will be explained while focusing on the difference relative to the above-mentioned mobile communication system according to the second modification.

Firstly, with reference to Fig. 12, in the mobile communication system according to the present fourth modification, an operation when the mobile station UE is compatible with "UTRAN" will be explained.

As illustrated in Fig. 12, in step S201, a mobile station UE (i.e., a mobile station UE compatible with E-UTRAN), which has a capability (EPS capability) of being connected to the EPC network using the E-UTRAN, transmits a "Tracking Area Update Request" including an "MS Network Capability" to which "EPC Capability:1" is set to the mobile switching center MME. The mobile switching center MME acquires the "MS Network Capability" from the received "Tracking Area Update Request".

In step S202, an authentication process and a concealment process are performed with respect to the mobile station UE.

When the mobile switching center MME determines that communication using the E-UTRAN is not allowed for the mobile station UE due to a reason such as no E-UTRAN use contract from contract information of the mobile station UE in step S203, the mobile switching center MME determines whether the mobile station UE is compatible with "UTRAN" in step S204.

When it is determined that the mobile station UE is compatible with "UTRAN", the mobile switching center MME may transmit the "Tracking Area Update Reject" including an "E-UTRAN access prohibited" to the mobile station UE in step S205.

In step S206, the mobile station UE can recognize that the communication using the E-UTRAN is not allowed and the mobile station UE is compatible with "UTRAN", through the "E-UTRAN access prohibited" included in the "Tracking Area Update Reject", and permanently invalidates the capability (EPS capability) of being connected to the EPC network using the E-UTRAN (i.e., changes the value of the "EPC Capability" managed by the management unit 21 from "1" to "0") until a predetermined trigger such as power restart is detected.

In step S207, the mobile station UE may transmit a "Routing Area Update Request" including an "MS Network Capability" to which "EPC Capability:0" is set to the mobile switching center SGSN in response to the "Tracking Area Update Reject".

When the above-mentioned "Routing Area Update Request" is transmitted by the mobile station UE, the mobile switching center SGSN performs a location registration process with respect to the UTRAN of the mobile station UE in response to the "Routing Area Update Request" including the "MS Network Capability" to which "EPC Capability:0" is set in step S208.

Secondly, with reference to Fig. 13, in the mobile communication system according to the present fourth modification, an operation when the mobile station UE is not compatible with "UTRAN" will be explained.

When the mobile switching center MME determines that the mobile station UE is not compatible with "UTRAN" in step S204, the mobile switching center MME may transmit the "Tracking Area Update Reject" including a "No suitable cells in tracking area" and the like to the mobile station UE in step S205A.

In step S206A, the mobile station UE can recognize that the communication using the E-UTRAN is not allowed and the mobile station UE is not compatible with "UTRAN", through the "No suitable cells in tracking area" and the like included in the "Tracking Area Update Reject", and temporarily invalidates the capability (EPS capability) of being connected to the EPC network using the E-UTRAN (i.e., changes the value of the "EPC Capability" managed by the management unit 21 from "1" to "0").

is, the mobile station UE memorizes that it is not possible to perform the location registration process in a current location registration area (Tracking Area).

In addition, the same operation is performed when a "Service Request" is transmitted, instead of the above-mentioned "Tracking Area Update Request".

### (Fifth modification)

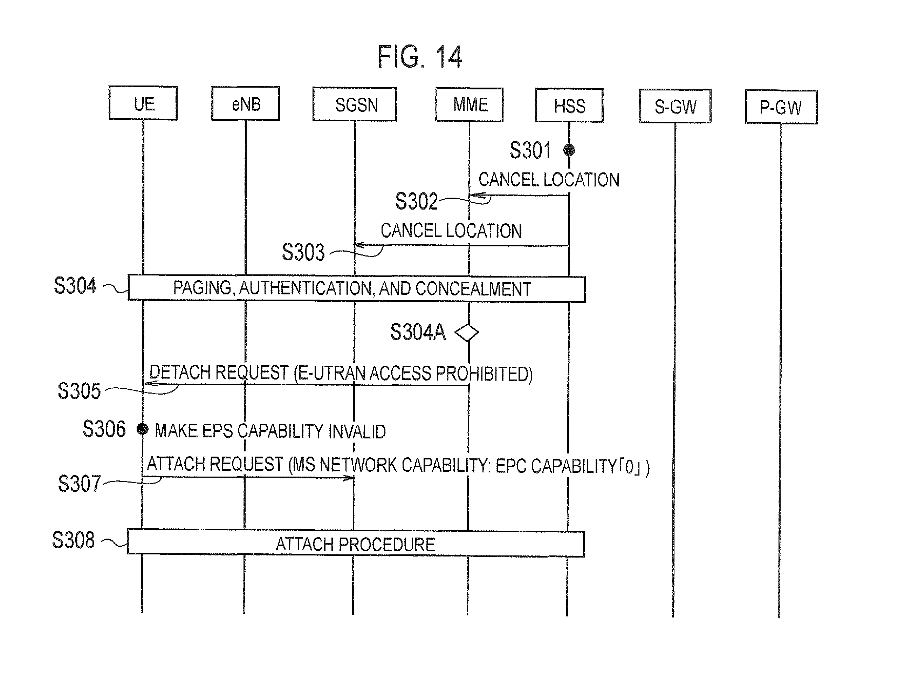

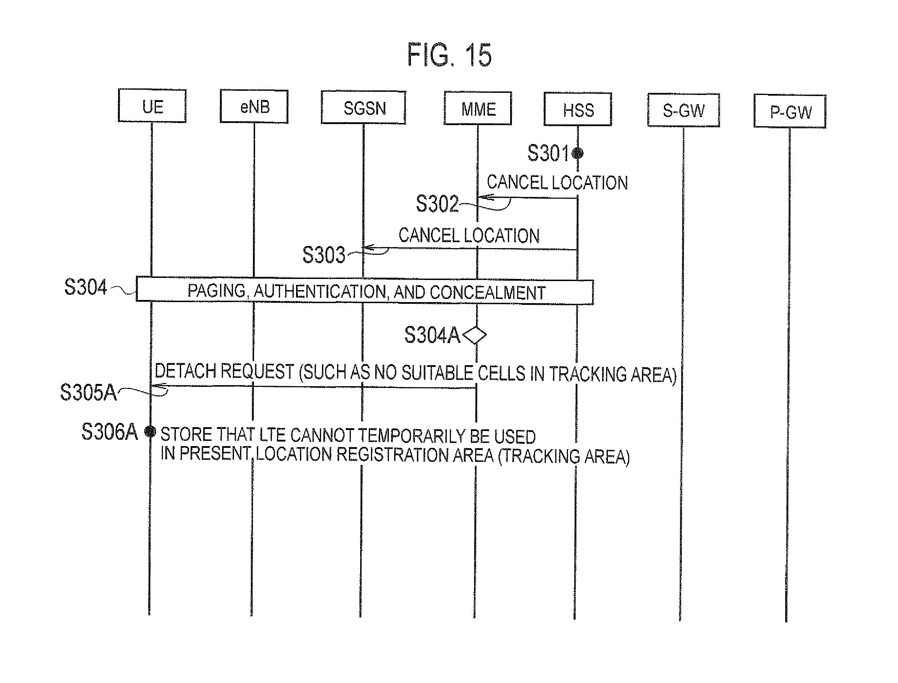

With reference to Fig. 14 and Fig. 15, a mobile communication system according to the fifth modification of the present invention will be explained. Hereinafter, the mobile communication system according to the fifth modification of the present invention will be explained while focusing on the difference relative to the above-mentioned mobile communication system according to the second modification.

Firstly, with reference to Fig. 14, in the mobile communication system according to the present fifth modification, an operation when the mobile station UE is compatible with "UTRAN" will be explained.

As illustrated in Fig. 14, if the home subscriber server HSS detects that communication using the E-UTRAN is not allowed for the mobile station UE due to a change and the like in the contract information of the mobile station UE in step S301, the home subscriber server HSS transmits a "Cancel Location" to the mobile switching center MME in step S302, and transmits the "Cancel Location" to the mobile switching center SGSN in step S303.

In step S304, a paging process, an authentication process, and a concealment process are performed with respect to the mobile station UE.

When the mobile switching center MME determines that the mobile station UE is compatible with "UTRAN" in step S304A, the mobile switching center MME may transmit a "Detach Request" including an "E-UTRAN access prohibited" to the mobile station UE in step S305.

In step S306, the mobile station UE can recognize that the communication using the E-UTRAN is not allowed and the mobile station UE is compatible with "UTRAN", through the "E-UTRAN access prohibited" included in the "Detach Request", and permanently invalidates the capability (EPS capability) of being connected to the EPC network using the E-UTRAN (i.e., changes the value of the "EPC Capability" managed by the management unit 21 from "1" to "0") until a predetermined trigger such as power restart is detected.

In step S307, the mobile station UE may transmit an "Attach Request" including an "MS Network Capability" to which "EPC Capability:0" is set to the mobile switching center SGSN in response to the "Detach Request".

Secondly, with reference to Fig. 15, in the mobile communication system according to the present fifth modification, an operation when the mobile station UE is not compatible with "UTRAN" will be explained.

When the mobile switching center MME determines that the mobile station UE is not compatible with "UTRAN" in step S304, the mobile switching center MME may transmit the "Detach Request" including a "No suitable cells in tracking area" and the like to the mobile station UE in step S305A.

In step S306A, the mobile station UE can recognize that the communication using the E-UTRAN is not allowed and the mobile station UE is not compatible with "UTRAN", through the "No suitable cells in tracking area" and the like included in the "Detach Request", and temporarily invalidates the capability (EPS capability) of being connected to the EPC network using the E-UTRAN (i.e., changes the value of the "EPC Capability" managed by the management unit 21 from "1" to "0").

That is, the mobile station UE memorizes that it is not possible to perform the location registration process in a current location registration area (Tracking Area).

In addition, the same operation is performed when the mobile station UE stays in the UTRAN.

The characteristics of the present embodiment as described above may also be expressed as follows.

The first characteristic of the present embodiment is a mobile communication method that includes a step in which a mobile station UE transmits an "Attach Request (a first location registration request signal)" including an "MS Network Capability" (capability information indicating that it is compatible with E-UTRAN (a second radio access network)) to which "EPC Capability:1" is set to a mobile switching center SGSN housing a UTRAN (a first radio access network), a step in which the mobile switching center SGSN transmits an "Attach Reject" (a location registration rejection signal including information indicating that communication using the E-UTRAN is not allowed) including an "E-UTRAN access prohibited" to the mobile station UE, a step in which the mobile station UE transmits an "Attach Request" (a second location registration request signal including capability information indicating that it is not compatible with E-UTRAN) including the "MS Network Capability" to which "EPC Capability:0" is set to the mobile switching center SGSN in response to the "Attach Reject", and a step in which the mobile switching center SGSN performs an Attach process (a location registration process) with respect to the UTRAN of the mobile station UE in response to the "Attach Request" including the "MS Network Capability" to which "EPC Capability:0" is set.

In the first characteristic of the present embodiment, the mobile communication method may further include a step in which the mobile switching center SGSN determines whether the communication using the E-UTRAN is allowed for the mobile station UE.

In the first characteristic of the present embodiment, the mobile communication method may further include a step in which a home subscriber server HSS (a predetermined server device) determines whether the communication using the E-UTRAN is allowed for the mobile station UE according to the request of the mobile switching center SGSN, and notifies the mobile switching center SGSN of a determination result.

In the first characteristic of the present embodiment, the mobile communication method may further include a step in which the mobile switching center SGSN decides which the mobile switching center SGSN or the predetermined server device should determine whether the communication using the E-UTRAN is allowed for the mobile station UE, based on a mobile station identifier (e.g., an IMSI, a GTUI and the like) included in the "Attach Request" including the "MS Network Capability" to which "EPC Capability: 1" is set.

The second characteristic of the present embodiment is a mobile station UE that includes an Attach processing unit 22 configured to transmit an "Attach Request" including an "MS Network Capability" to which "EPC Capability:1" is set to a mobile switching center SGSN and to receive an "Attach Reject" including an "E-UTRAN access prohibited" from the mobile switching center SGSN, wherein the Attach processing unit 22 is configured to transmit the "Attach Request" including the "MS Network Capability" to which "EPC Capability:0" is set to the mobile switching center SGSN in response to the "Attach Reject".

The third characteristic of the present embodiment is a mobile switching center SGSN that includes a reception unit 11 configured to receive an "Attach Request" including an "MS Network Capability" to which "EPC Capability:1" is set from a mobile station UE, a transmission unit 14 configured to transmit an "Attach Reject" including an "E-UTRAN access prohibited" to the mobile station UE, and an HSS interface 13 configured to perform an Attach process with respect to the UTRAN of the mobile station UE in response to the "Attach Request" including the "MS Network Capability" to which "EPC Capability:0" is set transmitted by the mobile station UE in response to the "Attach Reject".

In the third characteristic of the present embodiment, the mobile switching center SGSN may further include a determination unit 12 configured to determine whether communication using an E-UTRAN is allowed for the mobile station UE.

In the third characteristic of the present embodiment, the determination unit 12 may be configured to decide which the mobile switching center SGSN or a home subscriber server HSS should determine whether the communication using an E-UTRAN is allowed for the mobile station UE, based on an IMSI included in the "Attach Request" including the "MS Network Capability" to which "EPC Capability:1" is set.

The fourth characteristic of the present embodiment is a mobile communication method that includes a step in which a mobile station UE transmits an "Attach Request" including an "MS Network Capability" to which "EPC Capability:1" is set to a mobile switching center SGSN, a step in which the mobile switching center SGSN performs an Attach process with respect to the UTRAN of the mobile station UE in response to the "Attach Request" including the "MS Network Capability" to which "EPC Capability:1" is set, a step in which the mobile switching center SGSN transmits an "Attach Accept" (a location registration completion signal including information indicating that communication using the E-UTRAN is not allowed) including an "E-UTRAN access prohibited" to the mobile station UE, and a step in which the mobile station UE changes the value of an "EPC Capability", which has been set as one of the "MS Network Capability" managed by a management unit 21, from "1" to "0" in response to the "Attach Accept".

In the fourth characteristic of the present embodiment, the mobile communication method may further include a step in which the mobile switching center SGSN determines whether the communication using the E-UTRAN is allowed for the mobile station UE.

In the fourth characteristic of the present embodiment, the mobile communication method may further include a step in which a home subscriber server HSS determines whether the communication using the E-UTRAN is allowed for the mobile station UE according to the request of the mobile switching center SGSN, and notifies the mobile switching center SGSN of a determination result.

In the fourth characteristic of the present embodiment, the mobile communication method may include a step in which the mobile switching center SGSN decides which the mobile switching center SGSN or the home subscriber server HSS should determine whether the communication using the E-UTRAN is allowed for the mobile station UE, based on an IMSI included in the "Attach Request" including the "MS Network Capability" to which "EPC Capability:1" is set.

The fifth characteristic of the present embodiment is a mobile station UE that includes a management unit 21 configured to manage an "EPC Capability" (capability information indicating whether it is compatible with E-UTRAN), which is one of an "MS Network Capability", and an Attach processing unit 22 configured to transmit an "Attach Request" including the "MS Network Capability" to which "EPC Capability:1" is set to a mobile switching center SGSN, and receive an "Attach Accept" including an "E-UTRAN access prohibited" from the mobile switching center SGSN, wherein the management unit 21 is configured to change the value of the "EPC Capability", which has been set as one of the "MS Network Capability", from "1" to "0" in response to the "Attach Accept".

The sixth characteristic of the present embodiment is a mobile switching center SGSN that includes a reception unit 11 configured to receive an "Attach Request" including an "MS Network Capability" to which "EPC Capability:1" is set from a mobile station UE, an HSS interface 13 configured to perform an Attach process with respect to the UTRAN of the mobile station UE in response to the "Attach Request" including the "MS Network Capability" to which "EPC Capability:1" is set, and a transmission unit 14 configured to transmit an "Attach Accept" including an "E-UTRAN access prohibited" to the mobile station UE.

In the sixth characteristic of the present embodiment, the mobile switching center SGSN may include a determination unit 12 configured to determine whether communication using an E-UTRAN is not allowed for the mobile station UE.

In the sixth characteristic of the present embodiment, the determination unit 12 may be configured to decide which the mobile switching center SGSN or a home subscriber server HSS should determine whether the communication using an E-UTRAN is allowed for the mobile station UE, based on an IMSI included in the "Attach Request" including the "MS Network Capability" to which "EPC Capability:1" is set.

The seventh characteristic of the present embodiment is a mobile communication method that includes a step A in which a mobile station UE transmits an "Attach Request" including an "MS Network Capability" to which "EPC Capability:1" is set to a mobile switching center MME, a step B in which the mobile switching center MME transmits an "Attach Reject" (a location registration rejection signal including information indicating that communication using a radio access network is not allowed) including an "E-UTRAN access prohibited" to the mobile station UE, and a step C in which the mobile station UE changes the value of an "EPC Capability", which has been set as one of the "MS Network Capability", from "1" to "0" in response to the "Attach Reject".

In the seventh characteristic of the present embodiment, in the step C, when an "E-UTRAN access prohibited (a first rejection reason)" is included in the "Attach Reject", a "Tracking Area Update Reject", a "Service Request Reject", or a "Detach Request", the mobile station UE may change the value of the "EPC Capability", which has been set as one of the "MS Network Capability", from "1" to "0" until a predetermined trigger such as power start is detected, and in the step C, when a "No suitable cells in tracking area (a second rejection reason)" and the like are included in the "Attach Reject", the "Tracking Area Update Reject", the "Service Request Reject", or the "Detach Request", the mobile station UE may temporarily change the value of the "EPC Capability", which has been set as one of the "MS Network Capability", from "1" to "0".

The eighth characteristic of the present embodiment is a mobile station UE that includes a management unit 21 configured to manage an "EPC Capability", which is one of an "MS Network Capability", and an Attach processing unit 22 configured to transmit an "Attach Request" including the "MS Network Capability" to which "EPC Capability:1" is set to a mobile switching center MME, and receive an "Attach Reject" including an "E-UTRAN access prohibited" from the mobile switching center MME, wherein the management unit 21 is configured to change the value of the "EPC Capability", which has been set as one of the "MS Network Capability", from "1" to "0" in response to the "Attach Reject".

In the eighth characteristic of the present embodiment, when an "E-UTRAN access prohibited" is included in the "Attach Reject", a "Tracking Area Update Reject", a "Service Request Reject", or a "Detach Request", the management unit 21 may be configured to change the value of the "EPC Capability", which has been set as one of the "MS Network Capability", from "1" to "0" until a predetermined trigger such as power start is detected, and when a "No suitable cells in tracking area" and the like are included in the "Attach Reject", the "Tracking Area Update Reject", the "Service Request Reject", or the "Detach Request", the management unit 21 may be configured to temporarily change the value of the "EPC Capability", which has been set as one of the "MS Network Capability", from "1" to "0".

The ninth characteristic of the present embodiment is a mobile switching center MME that includes a reception unit 11 configured to receive an "Attach Request" including an "MS Network Capability" to which "EPC Capability: 1" is set from a mobile station UE, and a transmission unit 14 configured to transmit an "Attach Reject" including an "E-UTRAIV access prohibited" to the mobile station UE when it is determined that communication using an E-UTRAN is not allowed for the mobile station UE.

In the ninth characteristic of the present embodiment, when the mobile station UE is compatible with "UTRAN (another radio access network)", the transmission unit 14 may be configured to transmit an "Attach Reject", a "Tracking Area Update Reject", a "Service Request Reject", or a "Detach Request" including an "E-UTRAN access prohibited", and when the mobile station UE is not compatible with "UTRAN", the transmission unit 14 may be configured to transmit an "Attach Reject", a "Tracking Area Update Reject", a "Service Request Reject", or a "Detach Request" including a "No suitable cells in tracking area" and the like.

Note that operation of the above described the home subscriber server HSS, the gateway device S-GW/ P-GW, the mobile switching center MME, the radio base station eNB/Node B and the mobile station UE may be implemented by means of hardware, a software module executed by a processor, or a combination of both.

The software module may be provided in any type of storage medium such as an RAM (Random Access Memory), a flash memory, a ROM (Read Only Memory), an EPROM (Erasable Programmable ROM), an EEPROM (Electronically Erasable and Programmable ROM), a register, a hard disk, a removable disk, or a CD-ROM.

The storage medium is connected to the processor so that the processor can read and write information from and to the storage medium. Also, the storage medium may be integrated into the processor. Also, the storage medium and the processor may be provided in an ASIC. The ASIC may be provided in the home subscriber server HSS, the gateway device S-GW/ P-GW, the mobile switching center MME, the radio base station eNB/Node B and the mobile station UE. Also, the storage medium and the processor may be provided in the radio base station eNB or the mobile station UE as a discrete component.

Hereinabove, the present invention has been described in detail using the above embodiment; however, it is apparent to those skilled in the art that the present invention is not limited to the embodiment described herein. Modifications and variations of the present invention can be made without departing from the spirit and scope of the present invention defined by the description of the scope of claims. Thus, what is described herein is for illustrative purpose, and has no intention whatsoever to limit the present invention.

## Claims

1. A mobile communication method comprising:
a step in which a mobile station transmits a first location registration request signal including capability information indicating that it is compatible with a second radio access network, to a mobile switching center housing a first radio access network;
a step in which the mobile switching center transmits a location registration rejection signal, which includes information indicating that communication using a second radio access network is not allowed, to the mobile station;
a step in which the mobile station transmits a second location registration request signal, which includes capability information indicating that it is not compatible with the second radio access network, to the mobile switching center in response to the location registration rejection signal; and
a step in which the mobile switching center performs a location registration process with respect to the first radio access network of the mobile station in response to the second location registration request signal.

2. The mobile communication method according to claim 1, comprising:
a step in which the mobile switching center determines whether the communication using the second radio access network is allowed for the mobile station.

3. The mobile communication method according to claim 1, comprising:
a step in which a predetermined server device determines whether the communication using the second radio access network is allowed for the mobile station according to a request of the mobile switching center, and notifies the mobile switching center of a determination result.

4. The mobile communication method according to claim 2 or 3, comprising:
a step in which the mobile switching center decides which the mobile switching center or the predetermined server device should determine whether the communication using the second radio access network is allowed for the mobile station, based on a mobile station identifier included in the first location registration request signal.

5. A mobile station comprising:
a transmission unit configured to transmit a first location registration request signal, which includes capability information indicating that it is compatible with a second radio access network, to a mobile switching center housing a first radio access network; and
a reception unit configured to receive a location registration rejection signal, which includes information indicating that communication using a second radio access network is not allowed, from the mobile switching center, wherein
the transmission unit is configured to transmit a second location registration request signal, which includes capability information indicating that it is not compatible with the second radio access network, to the mobile switching center in response to the location registration rejection signal.

6. A mobile switching center housing a first radio access network, the mobile switching center comprising:
a reception unit configured to receive a first location registration request signal, which includes capability information indicating that it is compatible with a second radio access network, from a mobile station;
a transmission unit configured to transmit a location registration rejection signal, which includes information indicating that communication using a second radio access network is not allowed, to the mobile station;
a location registration processing unit configured to perform a location registration process with respect to a first radio access network of the mobile station in response to a second location registration request signal which includes capability information indicating that it is not compatible with the second radio access network and is transmitted by the mobile station in response to the location registration rejection signal.

7. The mobile switching center according to claim 6, comprising:
a determination unit configured to determines whether the communication using the second radio access network is allowed for the mobile station.

8. The mobile switching center according to claim 7, wherein the determination unit is configured to decide which the mobile switching center or a predetermined server device should determine whether the communication using the second radio access network is allowed for the mobile station, based on a mobile station identifier included in the first location registration request signal.

9. A mobile communication method comprising:
a step in which a mobile station transmits a location registration request signal including capability information indicating that it is compatible with a second radio access network, to a mobile switching center housing a first radio access network;
a step in which the mobile switching center performs a location registration process with respect to the first radio access network of the mobile station in response to the location registration request signal;
a step in which the mobile switching center transmits a location registration completion signal, which includes information indicating that communication using a second radio access network is not allowed, to the mobile station; and
a step in which the mobile station changes managed capability information from the capability information indicating that it is compatible with the second radio access network to capability information indicating that it is not compatible with the second radio access network, in response to the location registration completion signal.

10. The mobile communication method according to claim 9, comprising:
a step in which the mobile switching center determines whether the communication using the second radio access network is allowed for the mobile station.

11. The mobile communication method according to claim 9, comprising:
a step in which a predetermined server device determines whether the communication using the second radio access network is allowed for the mobile station according to a request of the mobile switching center, and notifies the mobile switching center of a determination result.

12. The mobile communication method according to claim 10 or 11, comprising:
a step in which the mobile switching center decides which the mobile switching center or the predetermined server device should determine whether the communication using the second radio access network is allowed for the mobile station, based on a mobile station identifier included in the location registration request signal.

13. A mobile station comprising:
a management unit configured to manage capability information indicating whether it is compatible with a second radio access network;
a transmission unit configured to transmit a location registration request signal, which includes capability information indicating that it is compatible with the second radio access network, to a mobile switching center housing a first radio access network; and
a reception unit configured to receive a location registration completion signal, which includes information indicating that communication using a second radio access network is not allowed, from the mobile switching center, wherein
the management unit is configured to change managed capability information from the capability information indicating that it is compatible with the second radio access network to capability information indicating that it is not compatible with the second radio access network, in response to the location registration completion signal.

14. A mobile switching center housing a first radio access network, the mobile switching center comprising:
a reception unit configured to receive a location registration request signal, which includes capability information indicating that it is compatible with a second radio access network, from a mobile station;
a location registration processing unit configured to perform a location registration process with respect to a first radio access network of the mobile station in response to the location registration request signal; and
a transmission unit configured to transmit a location registration completion signal, which includes information indicating that communication using a second radio access network is not allowed, to the mobile station.

15. The mobile switching center according to claim 14, comprising:
a determination unit configured to determines whether the communication using the second radio access network is allowed for the mobile station.

16. The mobile switching center according to claim 15, wherein the determination unit is configured to decide which the mobile switching center or a predetermined server device should determine whether the communication using the second radio access network is allowed for the mobile station, based on a mobile station identifier included in the first location registration request signal.

17. A mobile communication method comprising:
a step A in which a mobile station transmits a location registration request signal including capability information indicating that it is compatible with a radio access network to a mobile switching center housing the radio access network;
a step B in which the mobile switching center transmits a location registration rejection signal, which includes information indicating that communication using the radio access network is not allowed, to the mobile station; and
a step C in which the mobile station changes managed capability information from the capability information indicating that it is compatible with the radio access network to capability information indicating that it is not compatible with the radio access network, in response to the location registration rejection signal.

18. The mobile communication method according to claim 17, wherein in the step C, when a first rejection reason is included in the location registration rejection signal, the mobile station permanently changes the managed capability information from the capability information indicating that it is compatible with the radio access network to the capability information indicating that it is not compatible with the radio access network, and
in the step C, when a second rejection reason is included in the location registration rejection signal, the mobile station temporarily changes the managed capability information from the capability information indicating that it is compatible with the radio access network to the capability information indicating that it is not compatible with the radio access network.

19. A mobile station comprising:
a management unit configured to manage capability information indicating whether it is compatible with a radio access network;
a transmission unit configured to transmit a location registration request signal, which includes capability information indicating that it is compatible with the radio access network, to a mobile switching center housing the radio access network; and
a reception unit configured to receive a location registration rejection signal, which includes information indicating that communication using a radio access network is not allowed, from the mobile switching center, wherein
the management unit is configured to change managed capability information from the capability information indicating that it is compatible with the radio access network to capability information indicating that it is not compatible with the radio access network, in response to the location registration rejection signal.

20. The mobile station according to claim 19, wherein
when a first rejection reason is included in the location registration rejection signal, the management unit is configured to permanently change the managed capability information from the capability information indicating that it is compatible with the radio access network to the capability information indicating that it is not compatible with the radio access network, and
when a second rejection reason is included in the location registration rejection signal, the management unit is configured to temporarily change the managed capability information from the capability information indicating that it is compatible with the radio access network to the capability information indicating that it is not compatible with the radio access network.

21. A mobile switching center housing a radio access network, the mobile switching center comprising:
a reception unit configured to receive a location registration request signal, which includes capability information indicating that it is compatible with a radio access network, from a mobile station; and
a transmission unit configured to, when it is determined that communication using the radio access network is not allowed for the mobile station, transmit a location registration rejection signal, which includes information indicating that the communication using the radio access network is not allowed, to the mobile station.

22. The mobile switching center according to claim 21, wherein
when the mobile station is compatible with another radio access network, the transmission unit is configured to transmit the location registration rejection signal including a first rejection reason, and
when the mobile station is not compatible with another radio access network, the transmission unit is configured to transmit the location registration rejection signal including a second rejection reason.
